# EUROPEAN PATENT APPLICATION

(11) **EP 4 118 961 A1**
(43) Date of publication of application: **18.01.2023**
(21) Application number: 21768419.0
(22) Date of filing: 04.03.2021
(51) Int. Cl.: A01K 29/00

(54) **ANOMALY SENSING SYSTEM**

(30) Priority: 09.03.2020 JP 2020040118
(71) Applicant: Nitto Denko Corporation, Ibaraki-shi, Osaka 567-8680 (JP)
(72) Inventor: KOZONOI, Nobuyuki, Ibaraki-shi, Osaka 567-8680 (JP); KIGAWA, Yoichi, Ibaraki-shi, Osaka 567-8680 (JP); LI, Wenjing, Ibaraki-shi, Osaka 567-8680 (JP); KASEDA, Yugo, Ibaraki-shi, Osaka 567-8680 (JP); YOKOYAMA, Hiromi, Ibaraki-shi, Osaka 567-8680 (JP); HIRAMOTO, Ryosuke, Ibaraki-shi, Osaka 567-8680 (JP)
(74) Representative: Müller-Boré & Partner Patentanwälte PartG mbB
(86) International application number: PCT/JP2021/008573
(87) International publication number: WO 2021/182314

(57) **Abstract**

An abnormality detecting system for detecting an abnormality of an animal that is a monitoring target is provided. The abnormality detecting system includes a inferring unit configured to infer on a per-predetermined-time-period basis whether a ruminating action of an animal that is a monitoring target occurs, by inputting time-series data from a motion sensor placed on a predetermined portion of the animal into a time-series model; and a determining unit configured to calculate a rumination rate that is a rate at which the inferring unit infers that the ruminating action occurs, and, in response to the rumination rate satisfying a predetermined condition, determine that an abnormality of the animal is detected.

## Description

### [Technical Field]

The present invention relates to an abnormality detecting system.

### [Background Art]

Generally speaking, a workflow from breeding through marketing of a cow is broadly divided into multiple steps (for example, grass-feeding, fattening, meat-processing, and so forth). Of these, the fattening process is carried out in a certain area called a feedlot, and therefore, a cow is susceptible to a bovine respiratory disease (BRD) or a bovine respiratory disease complex (BRDC) .

In this regard, for example, Non-Patent Document 1 below proposes a system for automatically detecting a cow that has actually developed a BRD (or BRDC) among cows infected with the BRD (or BRDC). The system allows earliest identification of the cow that has actually developed the BRD (or BRDC).

### [Prior art documents]

### [Non-patent documents]

[Non-Patent Document 1] Cargill, "Cargill brings facial recognition capability to farmers through strategic equity investment in Cainthus", [online], January 31, 2018 [retrieved February 28, 2020], Internet [URL: https://www.cargill.com/2018/cargrill-brings-facial-recognition-capability-to-farmers]

### [Summary of the Invention]

### [Problem to be Solved by the Invention]

In this regard, detecting an early warning of (or some abnormality concerning) a BRD (or BRDC) prior to an onset of the BRD (or BRDC) in a cow that is a monitoring target may reduce various costs required due to the onset of the BRD (or BRDC) or an increase in severity of the BRD (or BRDC).

In one aspect, an object is to provide an abnormality detecting system for detecting an abnormality in an animal that is a monitoring target.

### [Means for Solving the Problem]

According to one embodiment, an abnormality detecting system includes an inferring unit configured to infer on a per-predetermined-time-period basis whether a ruminating action of an animal that is a monitoring target occurs, by inputting time-series data from a motion sensor placed on a predetermined portion of the animal into a time-series model; and a determining unit configured to calculate a ruminating rate at which the inferring unit infers that the ruminating action occurs, and, in response to the ruminating rate satisfying a predetermined condition, determine that an abnormality of the animal is detected.

### [Advantageous Effects of the Invention]

An abnormality detecting system for detecting an abnormality in an animal that is a monitoring target can be provided.

### [Brief Description of Drawings]

Fig. 1 is a diagram illustrating an example of a system configuration of an abnormality detecting system and a functional configuration of a server apparatus.
Fig. 2 is a diagram illustrating an example of a hardware configuration of the server apparatus.
Fig. 3 is a diagram illustrating a specific example of a process of a data obtaining unit.
Fig. 4 is a diagram illustrating a specific example of a process of a learning unit.
Fig. 5 is a diagram illustrating details of a LSTM unit.
Fig. 6 is a diagram illustrating a specific example of a process of an inferring unit.
Fig. 7 is a diagram illustrating a specific example of a process of an early warning detecting unit.
Fig. 8 is a flowchart illustrating a flow of a learning process.
Fig. 9 is a flowchart illustrating a flow of a inferring process.
Fig. 10 is a flowchart illustrating a flow of an early warning detecting process.

### [Mode for Carrying Out the Invention]

Hereinafter, each embodiment will be described with reference to the accompanying drawings. In the present specification and the drawings, for the components having substantially the same functional configurations, the duplicate descriptions are omitted by providing the same reference numerals thereto.

### [First embodiment]

### <System configuration of abnormality detecting system and server apparatus>

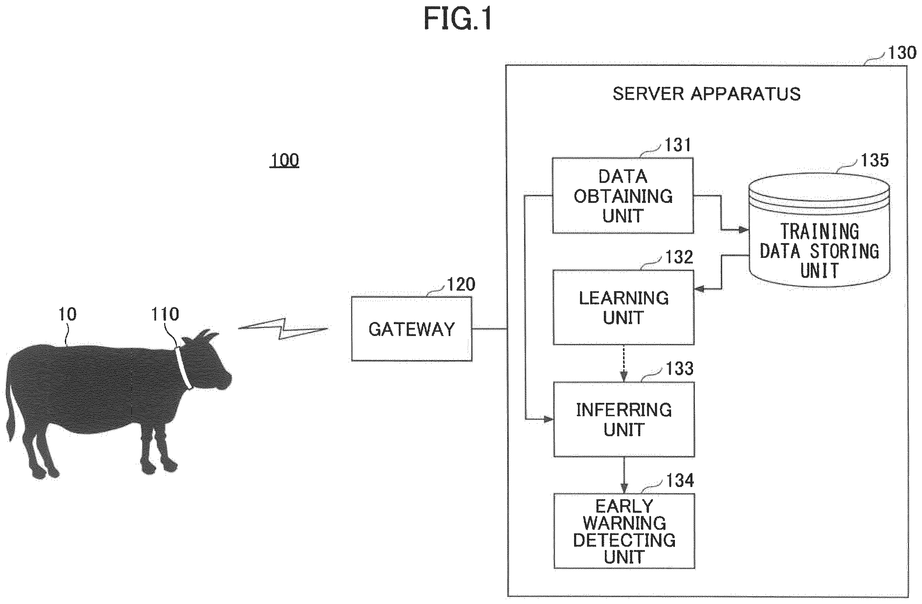

First, the system configuration of the abnormality detecting system and the functional configuration of the server apparatus will be described. Fig. 1 is a diagram illustrating an example of the system configuration of the abnormality detecting system and the functional configuration of the server apparatus.

The abnormality detecting system 100 is a system for detecting an early warning of (or some abnormality concerning) a BRD (or BRDC) in any cow in a feedlot before the cow develops the BRD (or BRDC) during a fattening process.

As depicted in Fig. 1, the abnormality detecting system 100 includes a measuring device 110, a gateway device 120, and the server apparatus 130. In the abnormality detecting system 100, the measuring device 110 and the gateway device 120 are interconnected via wireless communication, and the gateway device 120 and the server apparatus 130 are interconnected via a network (not depicted).

The measuring device 110 is a motion sensor (in the present embodiment, an acceleration sensor) of three dimensions (an X-axis direction, a Y-axis direction, and a Z-axis direction) attached to a predetermined portion of a cow 10 (in the example of Fig. 1, the neck of the cow 10). The X-axis direction is, for example, a direction along a body surface of the neck of the cow 10, which is a direction along a circumference of the neck, and the Y-axis direction is, for example, a direction along the body surface of the neck of the cow 10, which is a direction to the body relative to the head. The Z-axis direction is, for example, a direction perpendicular to the body surface of the neck of the cow 10.

The measuring device 110 measures time-series three-dimensional acceleration data at a predetermined sampling frequency (for example, 5 [Hz] - 20 [Hz]) and transmits the data to the gateway device 120.

The gateway device 120 transmits the time-series three-dimensional acceleration data transmitted from the measuring device 110 to the server apparatus 130.

The server apparatus 130 detects an early warning of (or some abnormality concerning) a BRD (or BRDC) in any cow in a feedlot before the cow develops the BRD (or BRDC). An abnormality detecting program is installed in the server apparatus 130, and when the program is executed, the server apparatus 130 functions as a data obtaining unit 131, a learning unit 132, an inferring unit 133, and an early warning detecting unit 134.

The data obtaining unit 131 is an example of an obtaining unit. The data obtaining unit 131 divides the time-series three-dimensional acceleration data transmitted from the gateway device 120 on a per-predetermined-time-period (for example, 2 [sec]) basis and associates each predetermined time period data with information indicating whether a ruminating action of the cow 10 occurs. The data obtaining unit 131 stores each time-series three-dimensional acceleration data in a training data storing unit 135 on a per-predetermined-time-period basis as training data associated with information indicating whether a ruminating action of a cow 10 occurs.

The learning unit 132 includes a long short-term memory (LSTM) unit which is an example of a time series model which performs machine learning using time-series data as input thereinto. The learning unit 132 reads the training data from the training data storing unit 135 and inputs the time-series three-dimensional acceleration data included in the read data into the LSTM unit on a per-predetermined-time-period basis. The learning unit 132 perform machine learning with respect to the LSTM unit in such a manner that the output of the LSTM unit approaches the information indicating whether a ruminating action occurs included in the read data.

The inferring unit 133 inputs, into a pre-trained LSTM unit generated as a result of machine learning being performed in the learning unit 132, the time-series three-dimensional acceleration data with regard to the cow that is a monitoring target after being divided on a per-predetermined-time-period basis; and infers on a per-predetermined-time-period basis whether the cow performs a ruminating action.

The early warning detecting unit 134 is an example of a determining unit. The early warning detecting unit 134 aggregates sets of information provided on a per-predetermined-time-length basis (for example, on a per-day basis), each of the sets of information indicating on a per-predetermined-time-period basis whether a ruminating action occurs, inferred by the inferring unit 133; and calculates a rate of the number of times a determination was made that a ruminating action occurred with respect to the total number of times a determination was made (referred to as a rumination rate).

In addition, the early warning detecting unit 134 determines whether the calculated rumination rate is less than a predetermined threshold (i.e., whether a predetermined condition is satisfied), and when it is determined that the calculated rumination rate is less than the predetermined threshold, the early warning detecting unit 134 determines that an early warning (or some abnormality) has been detected and notifies a user.

Thus, in the abnormality detecting system 100 according to the first embodiment, time-series data output from the acceleration sensor attached to the neck of a cow is input into the pre-trained LSTM unit at a predetermined time period to infer on a per-predetermined-time-period basis whether a ruminating action of the cow occurs.

In the abnormality detecting system 100 according to the first embodiment, a rumination rate is calculated based on inferring results obtained on a per-predetermined-time-period basis, and the calculated rumination rate is monitored, on the assumption that some change occurs in ruminating actions of a cow that is a monitoring target prior to an onset of a BRD (or BRDC). Accordingly, in the abnormality detecting system 100 according to the first embodiment, it is possible to accurately detect an early warning of (or some abnormality concerning) a BRD (or BRDC) before an onset of the BRD (or BRDC).

### <Hardware configuration of server apparatus>

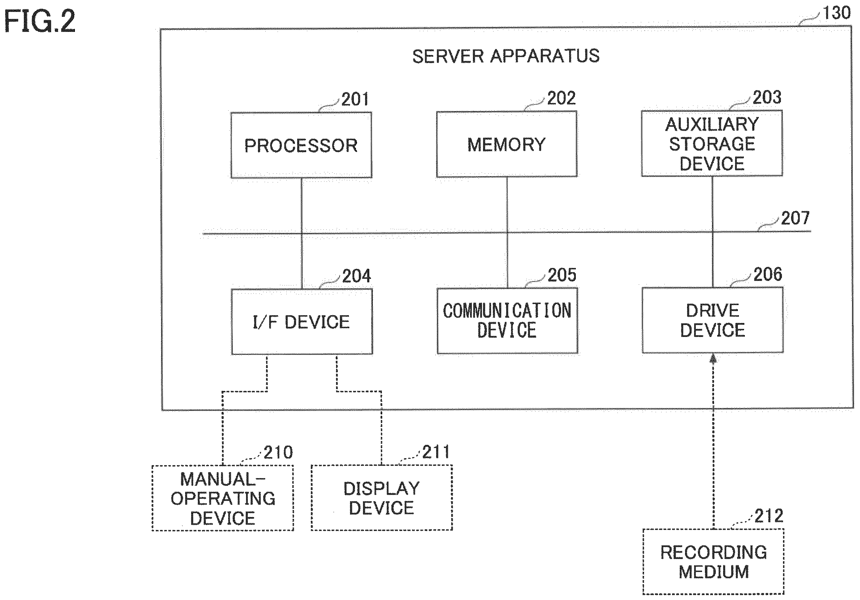

Next, a hardware configuration of the server apparatus 130 will be described. Fig. 2 is a diagram illustrating an example of a hardware configuration of the server apparatus. As depicted in Fig. 2, the server apparatus 130 includes a processor 201, a memory 202, an auxiliary storage device 203, an interface (I/F) device 204, a communication device 205, and a drive device 206. These hardware elements of the server apparatus 130 are interconnected via a bus 207.

The processor 201 includes various arithmetic and logic operation units such as a central processing unit (CPU), a graphics processing unit (GPU), and so forth. The processor 201 reads various programs (for example, an abnormality detecting program, and so forth), writes the programs into the memory 202, and executes the programs.

The memory 202 includes main storage devices such as a read-only memory (ROM), a random access memory (RAM), and the like. The processor 201 and the memory 202 form what is known as a computer, and when the processor 201 executes the various programs read and written onto the memory 202, the computer implements the above-described functions.

The auxiliary storage device 203 stores the various programs and various data used when the various programs are executed by the processor 201. For example, the training data storing unit 135 is implemented in the auxiliary storage device 203.

The I/F device 204 is a connection device that connects a manually-operating device 210, a display device 211, and the server apparatus 130, which are examples of an external apparatus/device. The I/F device 204 receives a manual operation performed on the server apparatus 130 through the manually-operating device 210. The I/F device 204 outputs the result of a process performed by the server apparatus 130 and displays the result through the display device 211.

The communication device 205 is a communication device for communicating with other apparatuses/devices. In the server apparatus 130, the communication device 205 is used to communicate with the gateway device 120 that is another device.

The drive device 206 is a device for setting a recording medium 212. The recording medium 212 is a medium for optically, electrically, or magnetically recording information, such as a CD-ROM, a flexible disk, a magnetooptical disk, or the like. The recording medium 212 may be a semiconductor memory or the like that electrically records information, such as a ROM, a flash memory, or the like.

The various programs installed in the auxiliary storage device 203 are installed, for example, as a result of a distributed recording medium 212 being set in the drive device 206 and the various programs recorded in the recording medium 212 being read out by the drive device 206. Alternatively, the various programs installed in the auxiliary storage device 203 may have been installed by downloading the various programs from a network via the communication device 205.

<Specific example of process of data obtaining unit>

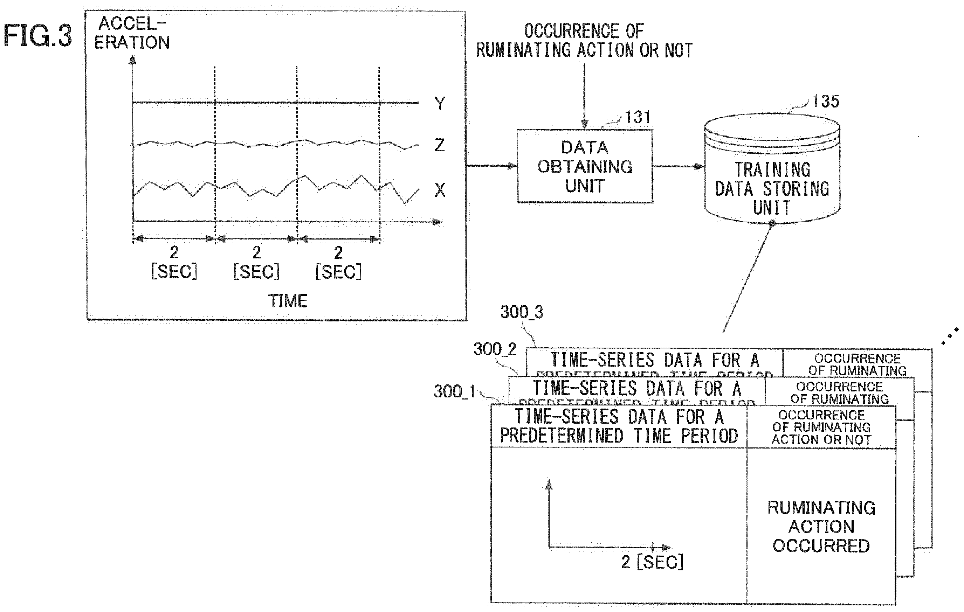

Next, a specific example of a process performed by the data obtaining unit 131 from among processes performed by the various units of the server apparatus 130 will be described. Fig. 3 is a diagram illustrating a specific example of a process of the data obtaining unit. As depicted in Fig. 3, the data obtaining unit 131 obtains time-series three-dimensional acceleration data (i.e., time-series X-axis-directional acceleration data, time-series Y-axis-directional acceleration data, and time-series Z-axis-directional acceleration data) with respect to various cows. The example in Fig. 3 depicts a scheme, for when time-series three-dimensional acceleration data with respect to one cow is obtained, for the sake of simplicity of explanation.

As illustrated in Fig. 3, the data obtaining unit 131 divides the obtained time-series three-dimensional acceleration data on a per-predetermined-time-period (in the example of Fig. 3, 2 [sec]) basis. The data obtaining unit 131 associates the time-series three-dimensional acceleration data having been divided on a per-predetermined-time-period basis with respective sets of information each indicating whether a ruminating action occurred, and stores the thus-obtained data as training data 300_1, 300_2, 300_3, ··· in the training data storing unit 135.

### <Example of process of learning unit>

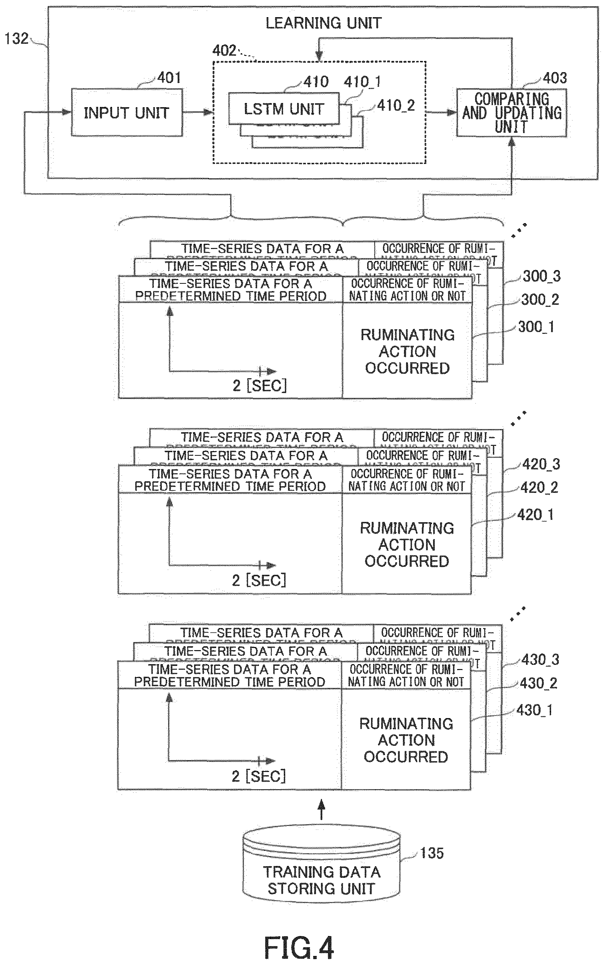

Next, a specific example of a process performed by the learning unit 132 from among the processes performed by the various units of the server apparatus 130 will be described. Fig. 4 is a diagram illustrating a specific example of a process of the learning unit. As depicted in Fig. 4, the learning unit 132 includes an input unit 401, a LSTM unit group 402, and a comparing and updating unit 403.

The input unit 401 reads time-series data that is stored on a per-predetermined-time-period basis included in the training data 300_1, 300_2, 300_3, ··· from the training data storing unit 135 and inputs the read data into a LSTM unit 410.

The LSTM unit 410 outputs information indicating whether a ruminating action occurred (the classification probability with respect to "occurred" and the classification probability with respect to "not occurred") as a result of the time-series data being input on a per-predetermined-time-period basis from the input unit 401. The LSTM unit 410 optimizes model parameters based on errors back propagated from the comparing and updating unit 403.

The comparing and updating unit 403 reads the sets of information each indicating whether a ruminating action occurred included in the training data 300_1, 300_2, 300_3, ··· from the training data storing unit 135 as ground truth data, and calculates errors with respect to the outputs of the LSTM unit 410. The comparing and updating unit 403 back propagates the calculated errors and optimizes the model parameters of the LSTM unit 410. This allows machine learning to be performed with respect to the LSTM unit 410 in such a manner that the output of the LSTM unit 410 approaches the ground truth data.

In the present embodiment, a pre-trained LSTM unit generated through machine learning with respect to the LSTM unit 410 using the training data 300_1, 300_2, 300_3, ··· is used as a basic model.

Specifically, in the learning unit 132, additional learning is performed on a pre-trained LSTM unit 410_1, which is a basic model, using training data 420_1, 420_2, 420_3, ··· obtained in a different season (for example, summer). That is, in the learning unit 132, the pre-trained LSTM unit 410_1, which is the basic model, can be used to generate an additionally pre-trained LSTM unit.

Further, in the learning unit 132, other additional learning is performed on a pre-trained LSTM unit 410_2, which is a basic model, using training data 430_1, 430_2, 430_3, ··· obtained in another different season (for example, winter). Thus, in the learning unit 132, another pre-trained LSTM unit can be generated using the pre-trained LSTM unit 410_2, which is the basic model.

### <Details of LSTM unit>

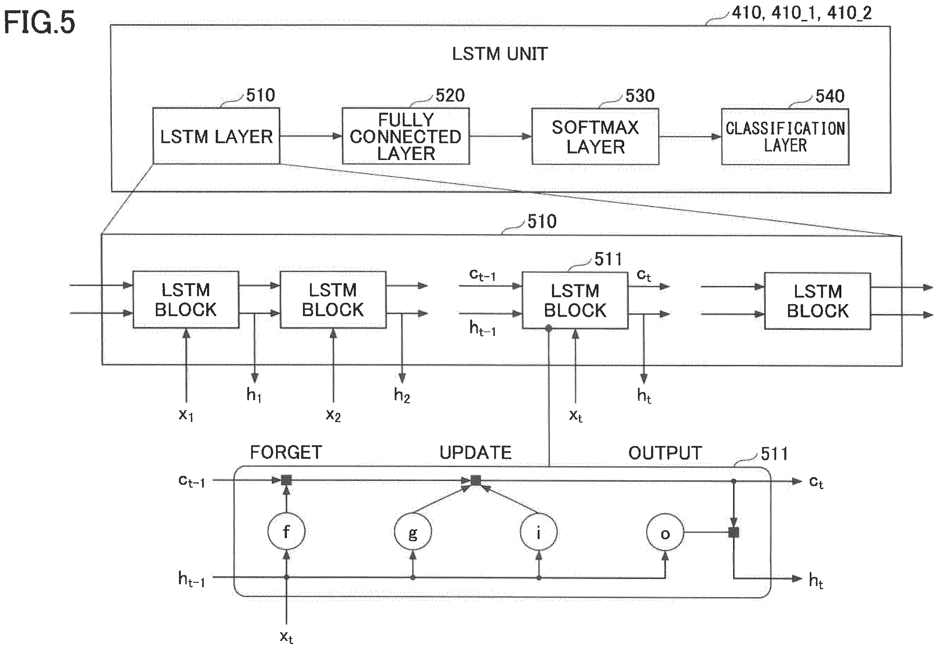

Next, details of the LSTM units will be described. Fig. 5 is a diagram depicting details of the LSTM unit. As depicted in the upper part of Fig. 5, the LSTM unit 410 (or the pre-trained LSTM unit 410_1 or 410_2) includes a LSTM layer 510, a fully connected layer 520, a softmax layer 530, and a classification layer 540.

The LSTM layer 510 optimizes the model parameters (various weights included in the LSTM layer 510) by learning, on a time-step to time-step basis, long-term dependence between time-series data indicating three-dimensional acceleration per predetermined time period and information indicating whether a ruminating action occurred.

The middle part of Fig. 5 depicts the detailed configuration of the LSTM layer 510. As depicted in the middle part of Fig. 5, the LSTM layer 510 includes a plurality of LSTM blocks. For example, with respect to a time step t, the LSTM block 511 calculates an output state (hₜ) and a cell state (ct) occurring after an update, using:
a current state of a network (cₜ₋₁, hₜ₋₁); and
time-series three-dimensional acceleration data (xₜ) with respect to the next time step.

The LSTM block 511 has, for example, the configuration depicted in the lower part of Fig. 5. In the lower part of Fig. 5, "f" represents a forget gate and "g" represents a cell candidate. In addition, "i" represents an input gate and "o" represents an output gate.

### <Specific example of process of inferring unit>

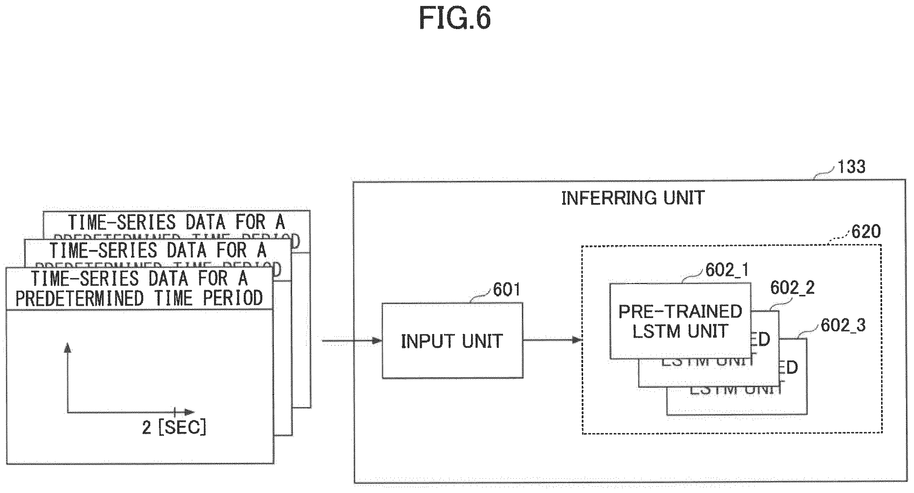

Next, a specific example of a process of the inferring unit 133, from among the processes of the various units included in the server apparatus 130, will be described. Fig. 6 is a diagram illustrating a specific example of a process of the inferring unit. As depicted in Fig. 6, the inferring unit 133 includes an input unit 601 and a pre-trained LSTM unit group 602.

The input unit 601 inputs time-series three-dimensional acceleration data, having been obtained by the data obtaining unit 131 for a cow that is a monitoring target and divided on a per-predetermined-time-period basis, into the pre-trained LSTM unit 602_1. The pre-trained LSTM unit 602_1 is a pre-trained LSTM unit generated through performing machine learning with respect to the LSTM unit 410.

It is noted that, with regard to time-series three-dimensional acceleration data obtained in a specific season (for example, in summer) and divided on a per-predetermined-time-period basis, the input unit 601 inputs the data into an additionally pre-trained LSTM unit 602_2. The additionally pre-trained LSTM unit 602_2 is an additionally pre-trained LSTM unit generated through performing additional learning with respect to the pre-trained LSTM unit 410_1.

Similarly, with regard to time-series three-dimensional acceleration data obtained in a specific season (for example, in winter) and divided on a per-predetermined-time-period basis, the input unit 601 inputs the data into an additionally pre-trained LSTM unit 602_3. The additionally pre-trained LSTM unit 602_3 is another additionally pre-trained LSTM unit generated through performing other additional learning with respect to the pre-trained LSTM unit 410_2.

### <Example of process of early warning detecting unit>

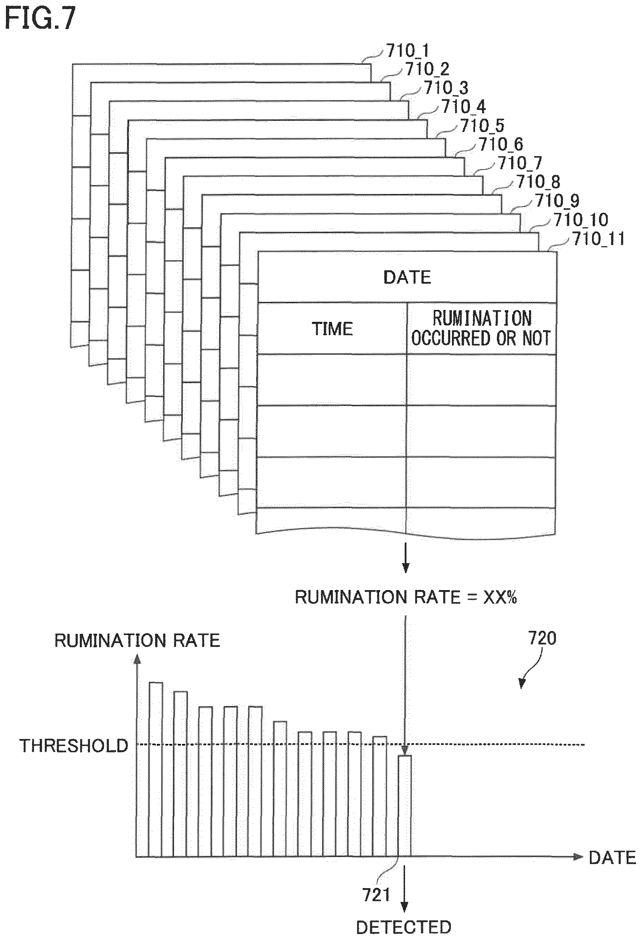

Next, a specific example of a process of the early warning detecting unit 134 from among the processes of the various units included in the server apparatus 130 will be described. Fig. 7 is a diagram illustrating a specific example of a process of the early warning detecting unit. As depicted in Fig. 7, the early warning detecting unit 134 obtains inferring results (for example, inferring result 710_11) for a day output from the inferring unit 133 once a day. In the example of Fig. 7, the inferring results each for one day are obtained consecutively for 11 days (see the inferring results 710_1 to 710_11).

As depicted in Fig. 7, the inferring results (for example, the inferring results 710_11) for one day output from the inferring unit 133 include inferring results on a per-predetermined-time-period basis each as to whether a ruminating action occurred stored in association with the corresponding time information. The early warning detecting unit 134 reads the inferring results for one day and calculates the rumination rate by dividing the number of times a determination was made that a ruminating action occurred by the total number of times a determination was made for the day.

The early warning detecting unit 134 reflects the calculated rumination rates into a graph 720. Then, in response to the rumination rate coming to be less than a predetermined threshold (when a predetermined condition is satisfied), determines that an early warning (or some abnormality) has been detected, and notifies the user of the determination result.

In the example of Fig. 7, the rumination rate comes to be less than the predetermined threshold on the day indicated by the reference sign 721, and thus, the early warning detecting unit 134 determines that an early warning (or some abnormality) has been detected on that day.

### <Learning process flow>

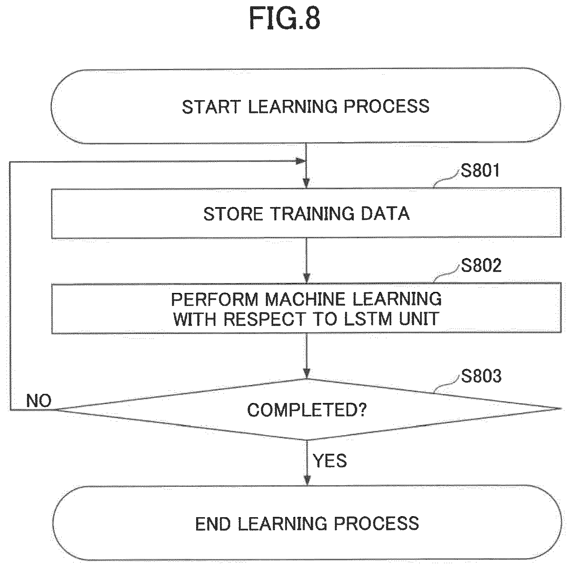

Next, a flow of a learning process in the server apparatus 130 will be described. Fig. 8 is a flowchart illustrating a flow of a learning process.

In step S801, the data obtaining unit 131 obtains time-series three-dimensional acceleration data, divides the data on a per-predetermined-time-period basis, and then, stores as training data the data in association with the respective sets of information each indicating whether a ruminating action occurred in the training data storing unit 135.

In step S802, the learning unit 132 performs machine learning with respect to the LSTM unit using the training data stored in the training data storing unit 135.

In step S803, the learning unit 132 determines whether the machine learning with respect to the LSTM unit has been completed. If it is determined that the machine learning with respect to the LSTM unit has not been completed yet in step S803 (in the case of NO in step S803), the process returns to step S801 and the machine learning is continued.

When it is determined that the machine learning with respect to the LSTM unit has been completed in step S803 (in the case of YES in step S803), the machine learning with respect to the LSTM unit is ended.

### <Flow of inferring process>

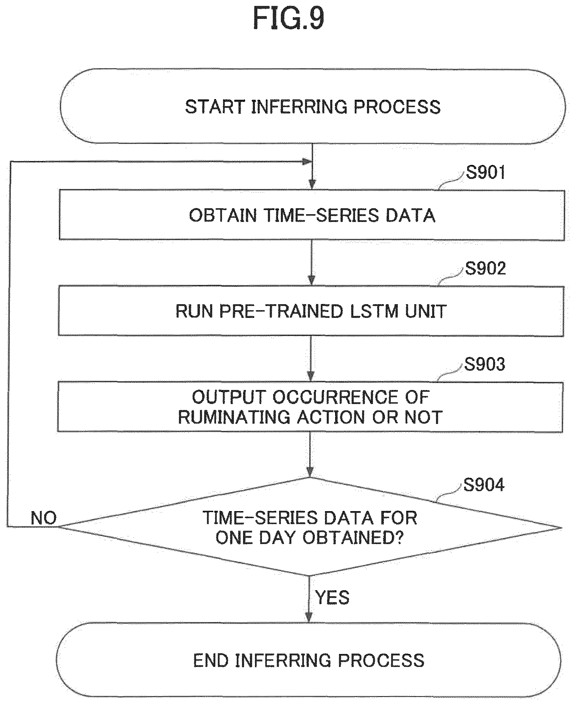

Next, a flow of an inferring process in the server apparatus 130 will be described. Fig. 9 is a flowchart depicting a flow of an inferring process.

In step S901, the data obtaining unit 131 obtains time-series three-dimensional acceleration data with respect to a cow that is a monitoring target and divides the data on a per-predetermined-time-period basis.

In step S902, the inferring unit 133 infers whether a ruminating action occurred by inputting the time-series three-dimensional acceleration data obtained on a per-predetermined-time-period basis into a pre-trained LSTM unit 602_1 (or an additionally pre-trained LSTM unit 602_2 or 602_3).

In step S903, the inferring unit 133 outputs an inferring result, inferred on a per-predetermined-time-period basis, as to whether a ruminating action occurred.

In step S904, the data obtaining unit 131 determines whether the time-series data for one day has been obtained. When it is determined in step S904 that the time-series data of one day has not been obtained yet (in the case of NO in step S904), the process returns to step S901.

When it is determined in step S904 that the time-series data for one day has been obtained (in the case of YES in step S904), the inferring process ends.

### <Flow of early warning detecting process>

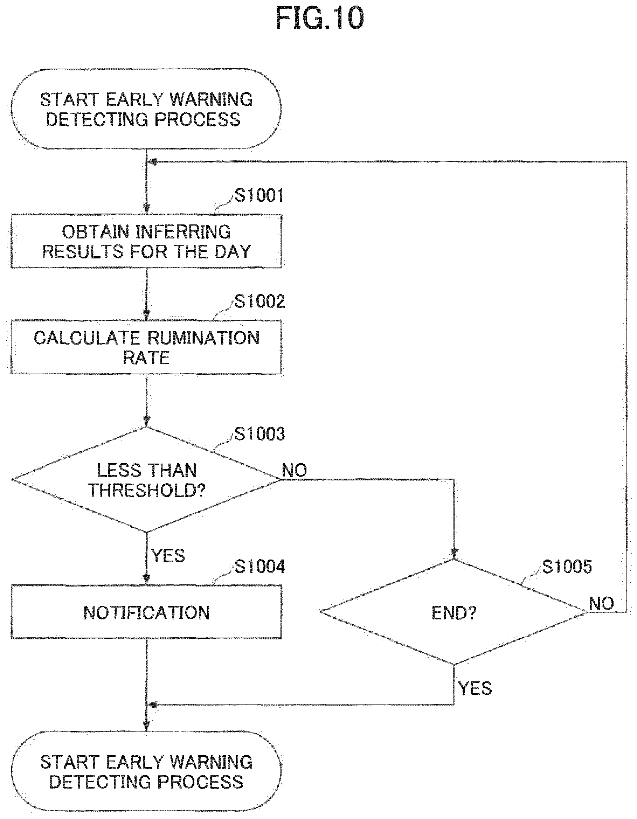

Next, a flow of an early warning detecting process by the server apparatus 130 will be described. Fig. 10 is a flowchart illustrating a flow of an early warning detecting process.

In step S1001, the early warning detecting unit 134 obtains inferring results for one day from the inferring unit 133.

In step S1002, the early warning detecting unit 134 calculates the rumination rate based on the obtained inferring results for one day.

In step S1003, the early warning detecting unit 134 determines whether the calculated rumination rate is less than the predetermined threshold. If it is determined in step S1003 that the calculated rumination rate is less than the predetermined threshold (in the case of YES in step S1003), the process proceeds to step S1004.

In step S1004, the early warning detecting unit 134 determines that an early warning (or some abnormality) has been detected with respect to the cow that is a monitoring target and notify the user of the determination result.

When it is determined in step S1003 that the calculated rumination rate is greater than or equal to the predetermined threshold (in the case of NO in step S1003), the process proceeds to step S1005.

In step S1005, the early warning detecting unit 134 determines whether a monitoring period for the cow that is the monitoring target has elapsed. When it is determined in step S1005 that the monitoring period has not elapsed yet (in the case of NO in step S1005), the process returns to step S1001.

When it is determined in step S1005 that the monitoring period has elapsed (in the case of YES in step S1005), the early warning detecting process ends.

### [Summary]

As can be clearly seen from the above description, the abnormality detecting system according to the first embodiment inputs time-series three-dimensional data obtained from an acceleration sensor attached to the neck of a cow that is a monitoring target into a pre-trained LSTM unit to infer on a per-predetermined-time-period basis whether a ruminating action of the cow occurs; then, calculates a rumination rate indicating a rate of it being inferred that a ruminating action occurred, and, in response to the calculated rumination rate satisfying a predetermined condition, determines that an abnormality of the cow has been detected.

Thus, in the abnormality detecting system according to the first embodiment, a pre-trained LSTM unit having undergone machine learning is used to infer on a per-predetermined-time-period basis whether a ruminating action has occurred; a rumination rate is calculated based on the inferring results obtained on the per-predetermined-time-period basis; and then, the calculated rumination rates are monitored. Thus, according to the first embodiment, an early warning of (or some abnormality concerning) a BRD (or BRDC) can be accurately detected prior to an onset of the BRD (or BRDC).

Thus, according to the first embodiment, an abnormality detecting system for detecting an abnormality of a cow that is a monitoring target can be provided.

### [Second embodiment]

In the first embodiment described above, the acceleration sensor is attached to the neck, but the acceleration sensor is not limited to being attached to the neck, and acceleration sensor may be attached to another portion.

According to the above-described first and second embodiments, the acceleration sensor is used as a motion sensor to be attached. However, a motion sensor other than an acceleration sensor (for example, an angular velocity sensor) may be used instead.

In the first embodiment described above, a rumination rate is calculated based on time-series data obtained for one day. However, instead, a rumination rate may be calculated based on time-series data obtained for two or more days, or based on time-series data obtained for a time shorter than one day.

In a case where a rumination rate is calculated based on time-series data obtained for a time shorter than one day, a rumination rate may be calculated based on time-series data obtained for daytime hours, for example. Alternatively, a rumination rate may be calculated based on time-series data obtained for nighttime hours.

In a case where a rumination rate with respect to daytime hours and a rumination rate with respect to nighttime hours are separately calculated, a difference, a ratio, or the like may be calculated between a rumination rate calculated based on time-series data obtained for daytime hours and a rumination rate calculated based on time-series data obtained for nighttime hours. Then, it may be determined that an early warning (or some abnormality) has been detected when the calculated difference or ratio satisfies a predetermined condition.

According to the first embodiment described above, it is determined on a per-day basis whether a rumination rate is less than the predetermined threshold. However, the determination frequency of determining whether a rumination rate is less than the predetermined threshold need not be once a day. For example, each time when a predetermined time period has elapsed, inferring results obtained for the past day may be used to determine whether a rumination rate is less than the predetermined threshold.

In the first embodiment described above, training data is generated using time-series data with respect to one cow, but training data may be generated using time-series data with respect to two or more cows.

In the above-described first embodiment, time-series three-dimensional acceleration data is used. However, the number of axes with respect to time-series data that is used is not limited to the three. For example, time-series two-dimensional acceleration data with respect to any two axes may be used instead. Alternatively, time-series one-dimensional acceleration data with respect to a single axis may be used instead.

In the first embodiment, the predetermined time period is set as "2 [sec]", but the predetermined time period is not limited to "2 [sec]", and may be any time period as long as the time period is longer than the cycle of a ruminating action of a cow.

With regard to the above-described first embodiment, a case in which the LSTM unit is used as a time-series model has been described. However, a time-series model other than a LSTM unit may be used instead. In addition, although model parameters of a time-series model are optimized using machine learning in the first embodiment, the model parameters may be optimized using a method other than the method of using machine learning.

In the first embodiment, an animal that is a monitoring target is a cow. However, an animal other than a cow may be determined as the monitoring target instead.

It should be noted that the present invention is not limited to the above-described embodiments. An embodiment where another element is used in a combination, for example, may be covered by the present invention. In these respects, it is possible to change the embodiment in any way without departing from the spirit of the invention, and how to change can be appropriately determined in accordance with what the present invention is applied to.

The present application claims priority to Japanese Patent Application No. 2020-040118, filed March 9, 2020, and the entire contents of Japanese Patent Application No. 2020-040118 are incorporated herein by reference in its entirety.

### [Description of Symbols]

100: Abnormality detecting system
110: Measuring device
130: Server apparatus
131: Data obtaining unit
132: Learning unit
133: Inferring unit
134: Early warning detecting unit
301_1, etc.: Training data
401: Input unit
402: LSTM unit group
410: LSTM unit
410_1, 410_2: Pre-trained LSTM units
403: Comparing and updating unit
510: LSTM layer
511: LSTM block
601: Input unit
602: Pre-trained LSTM unit group
602_1: Pre-trained LSTM unit
602_2, 602_3: Additionally pre-trained LSTM units

## Claims

1. An abnormality detecting system, comprising:
an inferring unit configured to infer on a per-predetermined-time-period basis whether a ruminating action of an animal that is a monitoring target occurs, by inputting time-series data from a motion sensor placed on a predetermined portion of the animal into a time-series model; and
a determining unit configured to calculate a rumination rate that is a rate at which the inferring unit infers that the ruminating action occurs, and, in response to the rumination rate satisfying a predetermined condition, determine that an abnormality of the animal is detected.

2. The abnormality detecting system as claimed in claim 1,
wherein
the inferring unit is configured to infer on the per-predetermined-time-period basis whether the ruminating action occurs, by inputting into the time-series model the time-series data obtained on the per-predetermined-time-period basis, the predetermined time period being longer than a period of the ruminating action.

3. The abnormality detecting system as claimed in claim 1,
wherein
the determining unit is configured to calculate the rumination rate on a per-day basis and determine on a per-day basis whether an abnormality of the animal is detected.

4. The abnormality detecting system as claimed in claim 1, further comprising:
an obtaining unit configured to divide on the per-predetermined-time-period basis the time-series data from the motion sensor placed on the predetermined portion of the animal, and store data obtained through the dividing in association with information indicating whether the ruminating action occurs; and
a learning unit configured to optimize a model parameter of a time-series model in such a manner that an output of the time-series model in response to the time-series data divided on the per-predetermined-time-period basis being input into the time-series model approaches information indicating whether the ruminating action occurs, and generate the time-series model used for the inferring by the inferring unit.

5. The abnormality detecting system as claimed in claim 4,
wherein
the learning unit is configured to further optimize, using time-series data obtained in a different season, the model parameter of the time-series model obtained through the generating.
